# EUROPEAN PATENT APPLICATION

(11) **EP 1 320 085 A1**
(43) Date of publication of application: **18.06.2003**
(21) Application number: 01970118.4
(22) Date of filing: 17.09.2001
(51) Int. Cl.: G09G 5/00, H04N 5/06, H04N 5/93

(54) **VIDEO DEVICE AND VIDEO DISPLAY METHOD**

(30) Priority: 20.09.2000 JP 2000285792
(71) Applicant: MATSUSHITA ELECTRIC INDUSTRIAL CO., LTD., Kadoma-shi, Osaka 571-8501 (JP)
(72) Inventor: KUBOTA, Kosuke, Yokosuka-shi, Kanagawa 239-0828 (JP)
(74) Representative: Grünecker, Kinkeldey, Stockmair & Schwanhäusser Anwaltssozietät
(86) International application number: JP0108032
(87) International publication number: WO02025625

(57) **Abstract**

Timing signal selection section 124 outputs a frame timing signal output from timing signal generation section 123 to drive section 128 and outputs a read timing signal, which controls timing of reading image data stored in storage section 126 and supplying the image data to drive section 128, to image reading section 127. When a read timing signal is output from timing signal selection section 124, image data reading section 127 reads the image data from storage section 126 according to the timing indicated by the read timing signal and outputs the image data to drive section 128. Drive section 128 outputs the image data to image display section 129 according to the timing of the frame timing signal output from timing signal selection section 124.

## Description

### Technical Field

The present invention relates to an image apparatus and image display method, and more particularly, to an image apparatus and image display method ideally applicable to an electronic apparatus equipped with at least one of an image display function of displaying image data or an image generation function of generating image data.

### Background Art

An image display apparatus such as a television receiver or a liquid crystal panel generally transfers and displays image data in a certain cycle.

To transfer image data at a certain speed or higher speed in such a way as to prevent flickering on a display screen, it is necessary to always keep a circuit that transfers image data to an image display apparatus in a predetermined refresh cycle continuously operating at a high frequency, which causes power consumption to increase.

As a method of solving this problem, there is a configuration intended to achieve low power consumption by improving the system of transferring image data as described in the Unexamined Japanese Patent Publication No.HEI 6-130910, for example.

In this configuration, an LCD module that displays images incorporates an internal storage circuit. This configuration also includes an external storage circuit connected to a system bus under the control of an MPU (microprocessor unit). Then, image data is transferred intermittently between the internal storage circuit and the external storage circuit. A high frequency clock necessary for this intermittent image data transfer is only generated when image data is transferred. A dedicated circuit monitors the operation of the system bus to which the external storage circuit is connected and the high frequency clock generator is started and the image data is transferred when this dedicated circuit detects that the MPU accesses the external storage circuit.

On the other hand, there is a growing demand for portable terminals intended for image communications, etc. in line with increasing applicability to multimedia in recent years. An image display apparatus used for such a portable terminal is required to have not only the function of displaying images but also a variety of functions such as a partial display function in a standby mode or a function of displaying a still image as a wallpaper. However, providing a dedicated interface between the MPU and image display apparatus to perform control over those functions from the MPU constitutes an obstacle to miniaturization of the apparatus or cost reduction.

On the other hand, there is a configuration superimposing a display screen control signal on an image signal or synchronization signal as described in the Unexamined Japanese Patent Publication No.HEI 9-204167, for example. According to this configuration, a control signal superimposing circuit of a computer creates a control signal under instructions from the user and superimposes this control signal during a vertical blanking period of an image signal or synchronization signal generated by a display control circuit. The display extracts the control signal superimposed on the image signal or synchronization using a control signal extraction circuit and the display control circuit generates an adjustment signal based on the extracted control signal.

However, for a conventional apparatus, for example, an electronic device such as a portable terminal requiring a large amount of processing such as radio control and voice processing, connecting an external storage circuit for storing image data to a system bus and transferring image data having an enormous amount of information through the system bus under the control of the MPU constitute a large processing burden on the MPU.

Furthermore, the conventional apparatus requires a dedicated circuit to transfer image data and also needs to always supply an image signal and image synchronization signal to the image display apparatus in order to carry out control, which constitutes an obstacle to miniaturization of the apparatus and reduction of power consumption.

### Disclosure of Invention

It is an object of the present invention to provide an image display apparatus in a configuration with low power consumption, a small circuit scale and a high degree of versatility, capable of displaying pre-stored image data and displaying external images.

This object is attained by storing image data, displaying an image corresponding to the image data using a synchronization signal generated inside the apparatus, stopping power supplies to sections of the apparatus which are not operating, selecting, when image data and a synchronization signal are input from the outside, the image data and synchronization signal input from the outside and displaying the image.

### Brief Description of Drawings

FIG.1 is a block diagram showing a configuration of an image apparatus according to Embodiment 1 of the present invention;
FIG.2 is a signal timing chart of the image apparatus according to the above-described embodiment;
FIG.3 is another signal timing chart of the image apparatus according to the above-described embodiment;
FIG.4 is another signal timing chart of the image apparatus according to the above-described embodiment;
FIG.5 is a block diagram showing a configuration example of an image display apparatus according to Embodiment 2;
FIG.6 is a block diagram showing a configuration example of an image apparatus according to Embodiment 3;
FIG.7 is a block diagram showing a configuration example of an image apparatus according to Embodiment 4;
FIG.8 is a block diagram showing a configuration example of an image apparatus according to Embodiment 5;
FIG.9 is a block diagram showing a configuration example of an image apparatus according to Embodiment 6;
FIG.10 is a block diagram showing a configuration example of an image generation apparatus according to Embodiment 7;
FIG.11 illustrates an example of a combination section of the image generation apparatus according to the above-described embodiment;
FIG.12 is another example of the combination section of the image generation apparatus according to the above-described embodiment;
FIG.13 is a block diagram showing a configuration example of a communication apparatus according to Embodiment 8; and
FIG.14 is a block diagram showing a configuration example of a communication apparatus according to Embodiment 9.

### Best Mode for Carrying out the Invention

With reference now to the attached drawings, embodiments of the present invention will be explained below.

### (Embodiment 1)

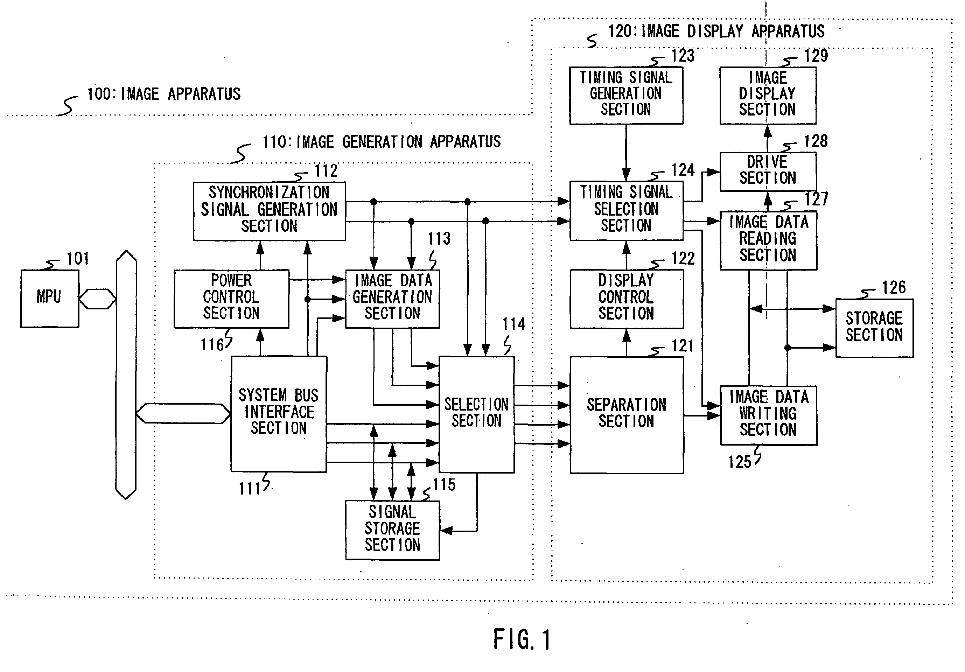

FIG.1 is a block diagram showing a configuration of an image apparatus according to Embodiment 1 of the present invention.

In FIG.1, image apparatus 100 is mainly constructed of MPU 101, image generation apparatus 110 and image display apparatus 120.

Image generation apparatus 110 is mainly constructed of system bus interface section 111, synchronization signal generation section 112, image data generation section 113, selection section 114, signal storage section 115 and power control section 116.

Image display apparatus 120 is mainly constructed of separation section 121, display control section 122, timing signal generation section 123, timing signal selection 124, image data writing section 125, storage section 126, image data reading section 127, drive section 128 and image display section 129.

When coded image data output from MPU 101 is displayed, system bus interface section 111 outputs an instruction for generating a synchronization signal to synchronization signal generation section 112 and outputs a signal output instruction for decoding and outputting coded image data to image data generation section 113. Furthermore, system bus interface section 111 notifies power supply section 116 whether synchronization signal generation section 112 and image data generation section 113 are operating or not.

When an instruction for generating a synchronization signal is output from system bus interface section 111, synchronization signal generation section 112 outputs an image synchronization signal indicating the timing of transmitting image data to image data generation section 113, selection section 114 and timing signal selection section 124.

Image data generation section 113 decodes the coded image data according to the signal output instruction output from system bus interface section 111 and outputs the decoded image data, a write signal (WR signal) which is an instruction for writing image data to storage section 126 and a selection signal (CS signal) for selecting storage section 126 to selection section 114.

When image data, a write signal and selection signal are output from image data generation section 113, selection section 114 outputs these signals to separation section 121, and during a blanking period during which none of these signals is output from image data generation section 113, selection section 114 outputs a blanking notification signal indicating the blanking period to signal storage section 115, reads a control command stored in signal storage section 115 and outputs the control command to separation section 121.

Furthermore, selection section 114 generates an identification signal (A0 signal) to identify whether the output signal is image data or a control command and outputs the identification signal to separation section 121.

Signal storage section 115 stores the control command output from MPU 101 through system bus interface section 111 and outputs the stored control command to selection section 114 when a blanking notification signal is output from selection 114.

Power control section 116 supplies power to synchronization signal generation section 112 and image data generation section 113 and stops power supplies to synchronization signal generation section 112 and image data generation section 113 when synchronization signal generation section 112 and image data generation section 113 are not operating.

Separation section 121 identifies whether the signal output from selection section 114 is image data or a control command based on an identification signal and when the signal output from selection section 114 is image data, separation section 121 outputs the image data to image data writing section 125 and when the signal output from selection section 114 is a control command, separation section 121 outputs the control command to display control section 122.

When the control command output from separation section 121 is a command instructing image display apparatus 120 to operate in synchronization with an image synchronization signal supplied from the outside, display control section 122 outputs an instruction for selecting the external synchronization signal to timing signal selection section 124.

Timing signal generation section 123 generates a frame timing signal to control timing of driving image display section 129 and outputs the frame timing signal to timing signal selection section 124.

Timing signal selection section 124 outputs the frame timing signal output from timing signal generation section 123 to drive section 128.

Furthermore, timing signal selection section 124 outputs a read timing signal for controlling timing of reading the image data stored in storage section 126 and supplying the image data to drive section 128 to image reading section 127 and outputs a write enable signal indicating timing at which the image data can be written to storage section 126 to image data writing section 125.

When an instruction for selecting an external synchronization signal from display control section 122 is input, timing signal selection section 124 outputs a frame timing signal synchronized with an image synchronization signal input from the outside to drive section 128 and outputs a read timing signal to image reading section 127.

When a write enable signal is output from timing signal selection section 124, image data writing section 125 outputs the image data output from separation section 121 to storage section 126.

Storage section 126 stores the image data output from image data writing section 125 and outputs the image data to image data reading section 127 on demand.

When a read timing signal is output from timing signal selection section 124, image data reading section 127 reads the image data from storage section 126 according to the timing indicated by the read timing signal and outputs the image data to drive section 128.

Drive section 128 outputs the image data output from image data reading section 127 to image display section 129 according to the timing of the frame timing signal output from timing signal selection section 124.

Image display section 129 displays the image data output from drive section 128.

Next, an operation of image apparatus 100 will be explained.

When image display apparatus 120 operates independently, timing signal generation section 123 outputs a frame timing signal for controlling the timing of driving image display section 129 to drive section 128 through timing signal selection section 124.

Furthermore, timing signal generation section 123 outputs a read timing signal indicating timing of reading the image data stored in storage section 126 to image data reading section 127 at timing synchronized with the frame timing signal.

The image data is output from storage section 126 to drive section 128 through image data reading section 127 according to the timing of the read timing signal, output to image display section 129 at timing synchronized with the frame timing signal and displayed as an image on image display section 129.

Thus, the image apparatus of Embodiment 1 displays image data of storage section 126 using a frame timing signal generated at timing signal generation section 123, and can thereby autonomously display an image even if no image synchronization signal or image data is supplied from the outside.

When image data supplied from image generation apparatus 110 is displayed on image display section 129, coded image data output from MPU 101 is output to image data generation section 113 through system bus interface section 111.

Furthermore, an instruction signal for generating an image synchronization signal is output to synchronization signal generation section 112 based on a control command output from MPU 101 and an instruction signal for outputting image data is output to image data generation section 113 (the control command is output to signal storage section 115).

According to an instruction signal output from system bus interface section 111, an image synchronization signal is generated at synchronization signal generation section 112 and output to image data generation section 113, selection section 114 and timing signal selection section 124.

Image data is generated by image data generation section 113 decoding coded image data and written in storage section 126 through selection section 114, separation section 121 and image data writing section 125 in synchronization with an image synchronization signal output from synchronization signal generation section 112.

On the other hand, the image synchronization signal output from synchronization signal generation section 112 is output to drive section 128 through timing signal selection section 124.

Furthermore, a read timing signal indicating timing of reading the image data stored in storage section 126 is output to image data reading section 127 at timing synchronized with the frame timing signal.

The image data is output from storage section 126 to drive section 128 through image data reading section 127 according to timing of the read timing signal, output to image display section 129 at timing synchronized with the frame timing signal and displayed as an image on image display section 129.

Thus, when the image synchronization signal and image data are output to the above-described image display apparatus, the image apparatus of Embodiment 1 synchronizes the timing of writing image data to the storing means with the drive timing, and can thereby display moving images without disturbance of a display and provide a high definition image display.

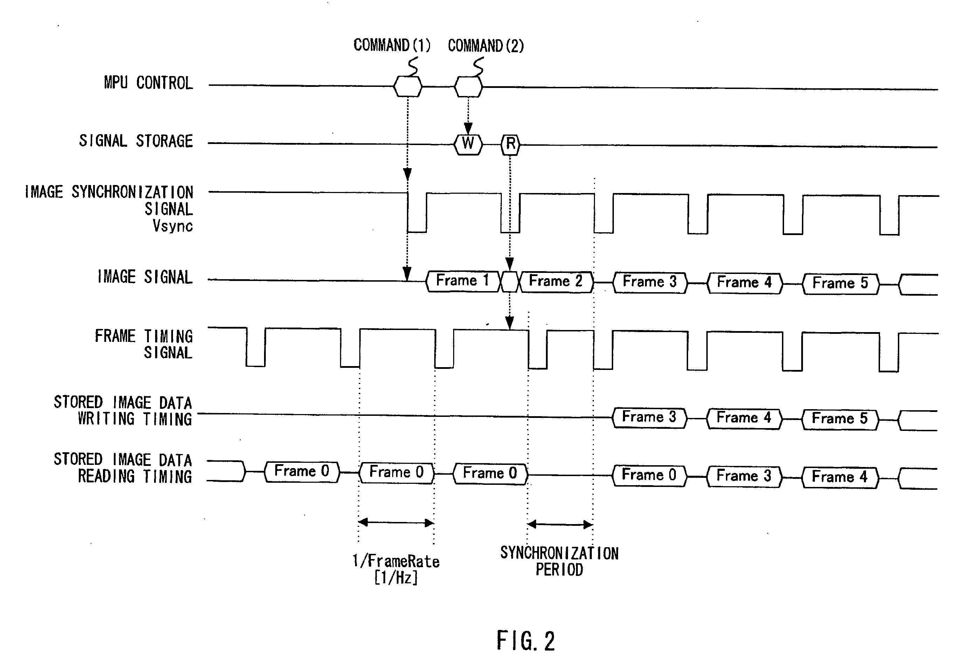

FIG.2 shows a signal timing chart of the image apparatus according to Embodiment 1.

In FIG.2, the horizontal axis indicates the time.

When image display apparatus 120 operates independently, image display apparatus 120 reads the image data stored in storage section 126 in synchronization with the frame timing signal output from timing signal generation section 123.

When an independent operation of image display apparatus 120 is switched to an operation of displaying an image from the outside, a command (1) for instructing generation and output of image data and an image synchronization signal is output from MPU 101 to system bus interface section 111.

According to command (1), synchronization signal generation section 112 generates an image synchronization signal (Vsync) and outputs to image data generation section 113, selection section 114 and timing signal selection section 124.

Furthermore, image data is generated by image data generation section 113 in synchronization with the image synchronization signal output from synchronization signal generation section 112 and output to selection section 114.

Then, MPU 101 outputs command (2) for instructing image display apparatus 120 to operate in synchronization with an image synchronization signal supplied from the outside and when system bus interface section 111 decides that command (2) is a command related to control over image display apparatus 120, system bus interface section 111 writes command (2) to signal storage section 115.

Command ( 2 ) is read from signal storage section 115 during a period during which no image data is sent from selection section 114 and output to separation section 121.

Then, command (2) is judged to be a control signal by separation section 121 and output to timing signal selection section 124 through display control section 122.

Writing to this signal storage section 115 is performed with a data signal, selection signal (CS signal) and write signal (WR signal).

Upon reception of command (2), timing signal selection section 124 outputs the frame timing signal output from timing signal generation section 123 and then changes the frame timing signal to be output to the signal output from synchronization signal generation section 112.

Thereafter, image data is written/read to/from storage section 126 in synchronization with the frame timing signal output from synchronization signal generation section 112.

After receiving command (2), image display apparatus 120 generates a frame timing signal synchronized with the image synchronization signal (Vsync) after a synchronization period and operates reading and writing of the image data from/to storage section 126 in synchronization with the image synchronization signal (Vsync).

FIG.2 shows an example where command (2) issued by MPU 101 to image display apparatus 120 is multiplexed with a vertical blanking period of the vertical synchronization signal (Vsync) and transferred to image display apparatus 120, but command (2) may also be multiplexed with the horizontal blanking period of a horizontal synchronization signal (Hsync).

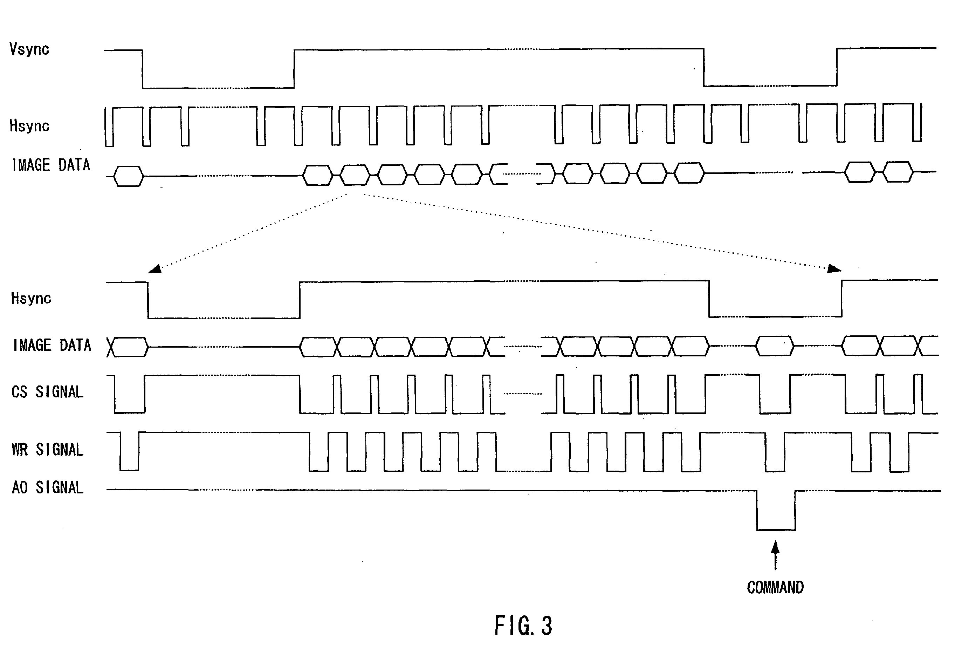

FIG.3 is another signal timing chart of the image apparatus according to Embodiment 1.

In FIG.3, command (2) of MPU 101 is output during a horizontal blanking period of horizontal synchronization signal (Hsync) 301.

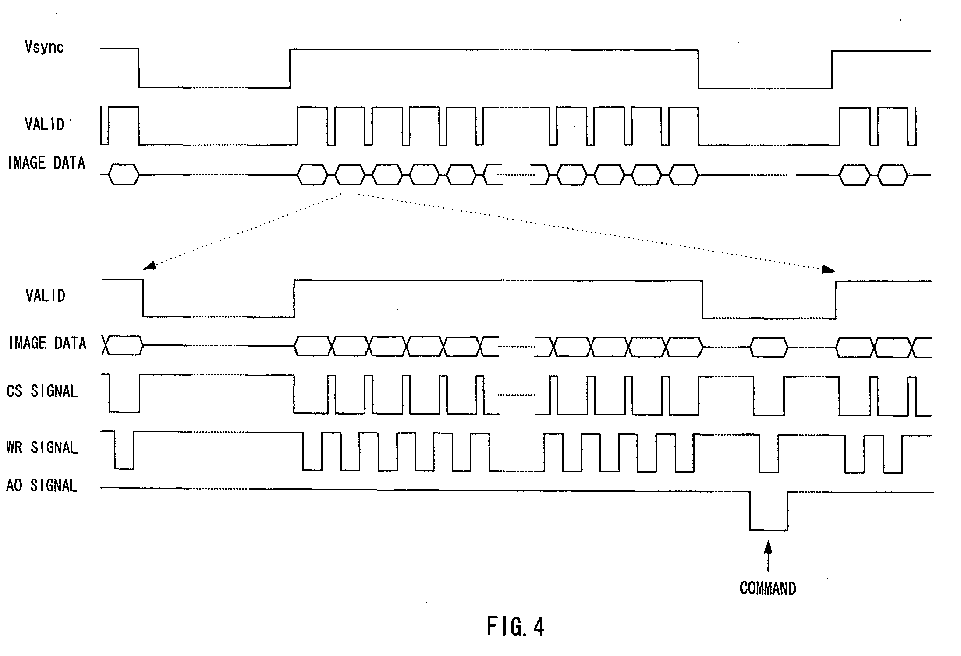

The image apparatus of Embodiment 1 uses the vertical synchronization signal (Vsync) and horizontal synchronization signal (Hsync) shown in FIG.3 as the image synchronization signals generated by the image generation apparatus and supplied to the image display apparatus, but even if these signals are a vertical synchronization signal (Vsync) and a valid data signal (VALID) as shown in FIG.4, similar effects can be obtained.

Thus, according to the image apparatus 1 of Embodiment 1, when the above-described image display apparatus displays image data independently by displaying the image data stored inside at timing of an internally generated synchronization signal, the image generation apparatus need not operate components such as the decoding means and image synchronization signal generating means, and can thereby reduce power consumption.

Furthermore, the image apparatus of Embodiment 1 sends a control command and image data through a common signal line using a control signal distinguishing a control command from image data, and can thereby display images with fewer signal lines.

Furthermore, when an image synchronization signal and image data are input from the outside to the image display apparatus, the image apparatus of Embodiment 1 synchronizes the timing of writing the image data to storage section 126 and the timing of driving image display section 129, and can thereby display moving images without disturbance of a display such as displaying an image being rewritten.

Furthermore, the image apparatus of Embodiment 1 does not directly connect the MPU to the image display apparatus and can perform control with fewer signal lines by transferring a control command from the MPU to the image display apparatus.

### (Embodiment 2)

An image apparatus of Embodiment 2 performs control and transfer of image data with the MPU connected to the image display apparatus.

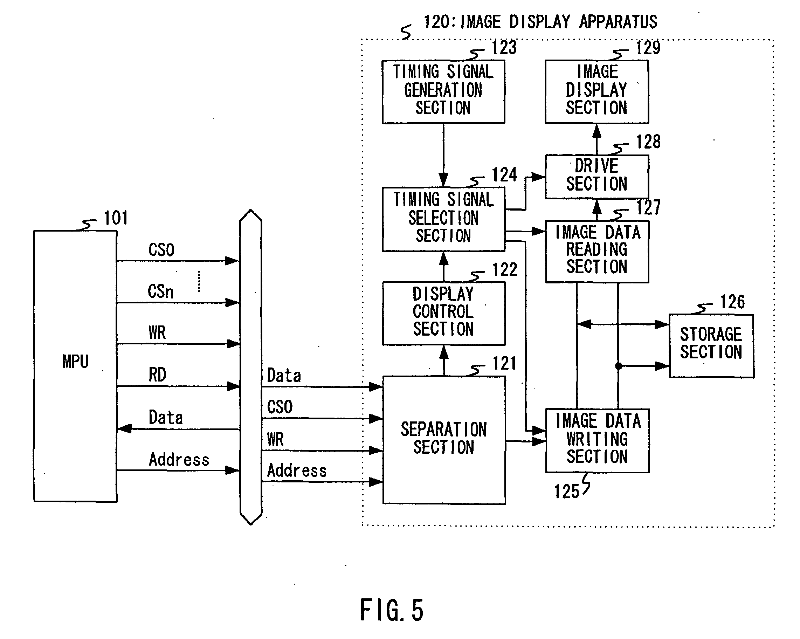

FIG.5 is a block diagram showing a configuration example of the image apparatus according to Embodiment 2. However, components common to those in FIG.1 are assigned the same reference numerals and detailed explanations thereof will be omitted.

In FIG.5, MPU 101 is connected to separation section 121 through a system bus controlled by MPU 101.

This system bus connects image data through a data bus, a CS signal through one selection signal, a WR signal through a write signal and an A0 signal through one address bus, respectively, and MPU 101 can thereby control the A0 signal at a logical level by accessing a predetermined address and can supply a control command and image data to image display apparatus 120.

Thus, the image apparatus of this Embodiment 2 can perform control and transfer of image data with the MPU directly connected to the image display apparatus, configure various electronic apparatuses irrespective of whether or not to display moving images of image data, eliminates the need to change the image display apparatus for each electronic apparatus and thereby reduce the costs of the electronic apparatus.

Furthermore, the image apparatus of this Embodiment 2 can use an image display apparatus in the same configuration for the image display section irrespective of the type of an image displayed.

The image apparatus of this Embodiment 2 connects the CS signal to selection signal CS0 of the system bus and the A0 signal to Address 0 of the address bus of the system bus, but it is also possible to connect the CS signal to an arbitrary selection signal and A0 signal to any one address bus.

Furthermore, the image apparatus of this Embodiment 2 uses data, a CS signal and a WR signal as the interface between the MPU or image generation apparatus and image display apparatus, but similar effects can also be achieved using data, a CS signal and read/write identification signal (R/W signal) as the interface.

### (Embodiment 3)

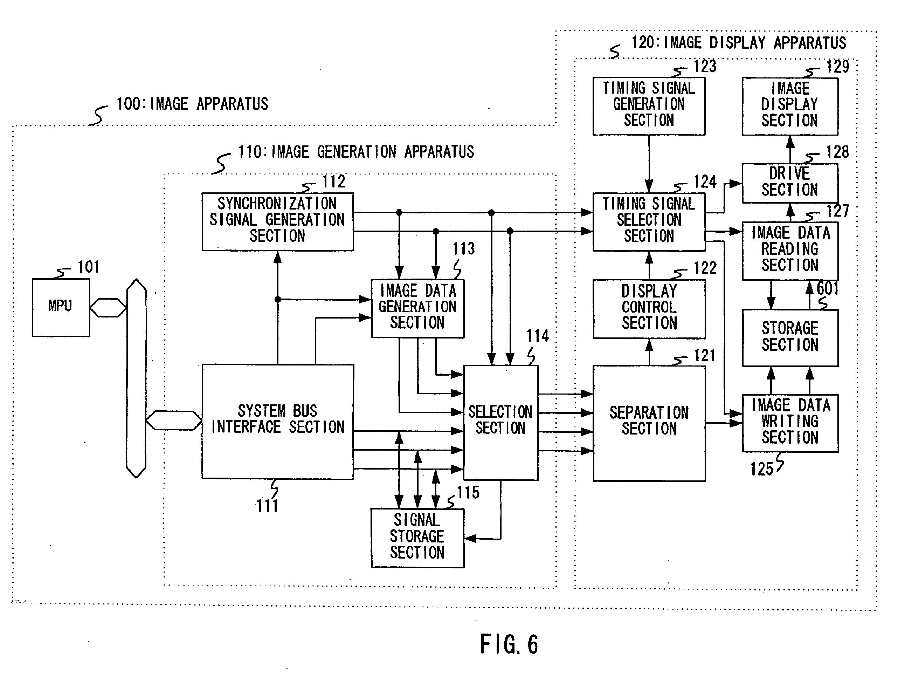

FIG.6 is a block diagram showing a configuration example of an image apparatus according to Embodiment 3. However, the components common to those in FIG.1 are assigned the same reference numerals as those in FIG.1 and detailed explanations thereof will be omitted.

The image apparatus in FIG.6 is different from FIG.1 in that the image apparatus in FIG.6 is equipped with storage section 601 and performs writing and reading of image data simultaneously.

In FIG.6, when a write enable signal is output from timing signal selection section 124, image data writing section 125 outputs image data output from separation section 121 to storage section 601.

Storage section 601 stores the image data output from image data writing section 125 and outputs the image data to image data reading section 127 on demand. Furthermore, storage section 601 has a dual port configuration with reading and writing signal lines provided separately and performs writing and reading of image data simultaneously.

When a read timing signal is output from timing signal selection section 124, image data reading section 127 reads image data from storage section 601 according to the timing indicated by the read timing signal and outputs to drive section 128.

Having a dual port configuration with reading and writing signal lines provided separately, the image apparatus of Embodiment 3 can write and read image data simultaneously and thereby reduce the operating clock rate.

### (Embodiment 4)

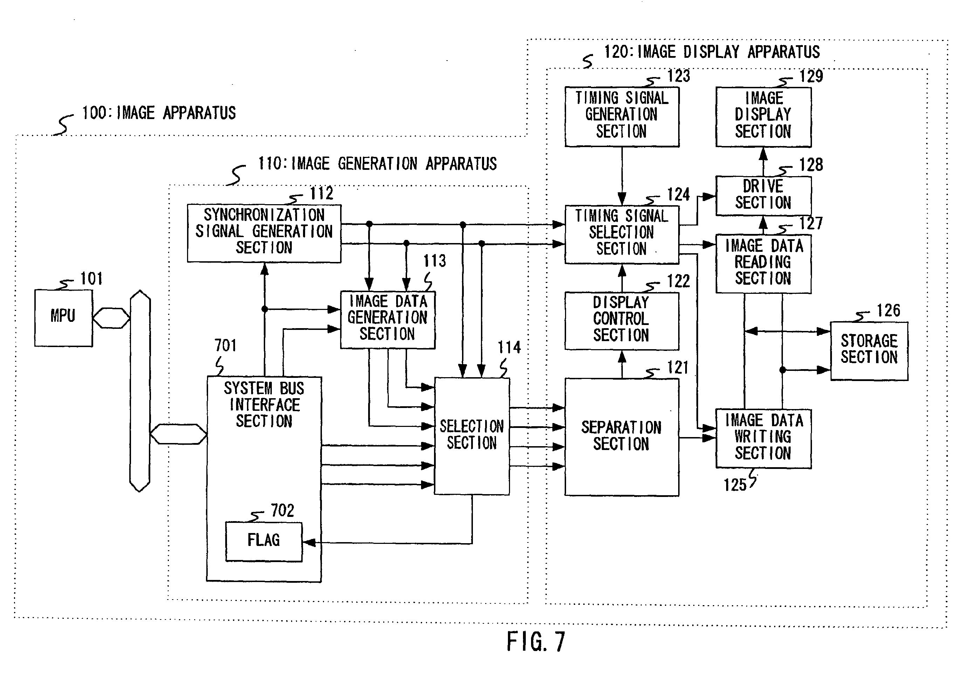

FIG.7 is a block diagram showing a configuration example of an image apparatus according to Embodiment 4. However, the components common to those in FIG.1 are assigned the same reference numerals as those in FIG.1 and detailed explanations thereof will be omitted.

The image apparatus in FIG.7 is different from FIG. 1 in that it is equipped with system bus interface section 701 including flag 702 and MPU 101 references flag 702 and outputs a control command to selection section 114 during a period during which MPU 101 can output the control command.

In FIG.7, system bus interface section 701 is provided with flag 702, which is readable from MPU 101 through the system bus.

When selection section 114 selects a signal from system bus interface section 701 and outputs to separation section 121, selection section 114 sets flag 702 in such a way as to indicate that transmission of a control command is enabled, and when selection section 114 selects a signal from image data generation section 113 and outputs to separation section 121, selection section 114 sets flag 702 in such a way as to indicate that transmission of a control command is disabled.

MPU 101 references flag 702 and issues a control command to image generation apparatus 110 only when flag 702 is enabled.

Using the flag indicating whether it is possible to issue a control command or not, the image apparatus of Embodiment 4 can send, when a control command is input from an external processing apparatus, the control command to the image display apparatus during a period during which no image data is sent, which eliminates the need to store the control command and makes it possible to reduce the circuit configuration.

### (Embodiment 5)

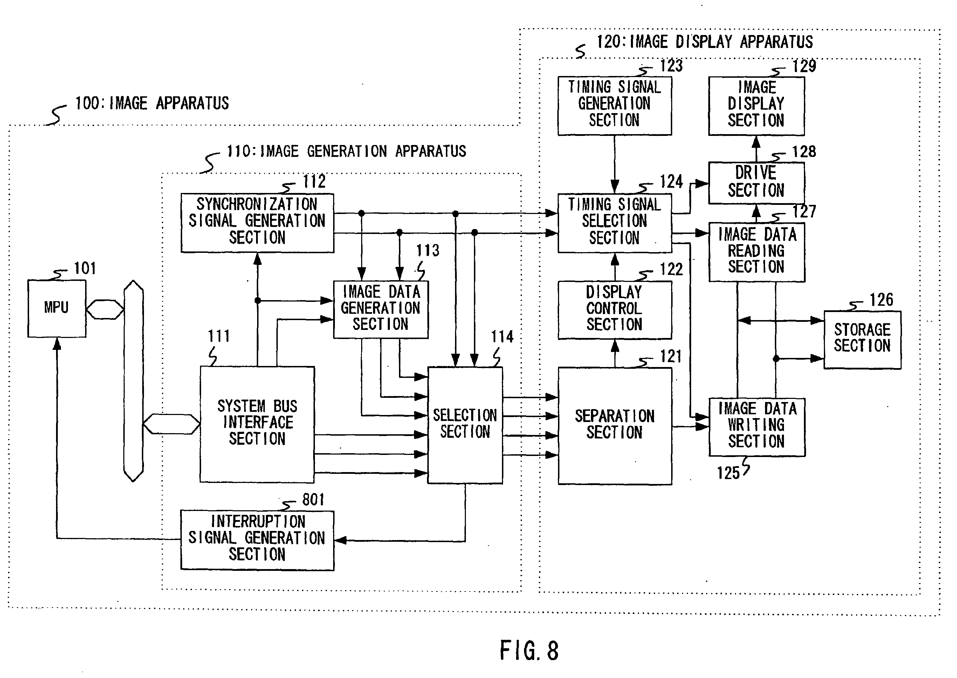

FIG.8 is a block diagram showing a configuration example of an image apparatus according to Embodiment 5. However, the components common to those in FIG.1 are assigned the same reference numerals as those in FIG.1 and detailed explanations thereof will be omitted.

The image apparatus in FIG.8 is different from FIG.1 in that it is equipped with interrupt signal generation section 801 and outputs an interrupt signal indicating that it is possible to issue a control command to the MPU.

In FIG.8, interrupt signal generation section 801 generates an interrupt signal at the beginning of a period during which selection section 114 selects system bus interface section 111 and outputs the interrupt signal to MPU 101.

For example, when there is no image synchronization signal input, selection section 114 always selects system bus interface section 111 and sets a blanking notification signal to be output to interrupt signal generation section 801 to "Low" and when an image synchronization signal and image data are input, selection section 114 sets the blanking notification signal to "Low" during only a period during which selection section 114 selects system bus interface section 111. Then, interrupt signal generation section 801 generates an interrupt signal when the blanking notification signal is changed from "High" to "Low".

Here, since MPU 101 controls the operation of synchronization signal generation section 112, MPU 101 can recognize whether an image synchronization signal is generated or not and when no image synchronization signal is generated, MPU 101 issues a control command at arbitrary timing and when an image synchronization signal is generated, MPU 101 issues a control command within a predetermined time determined by the blanking period of the image synchronization signal immediately after an interrupt signal is received.

By outputting an interrupt signal indicating that it is possible to issue a control command to an external processing apparatus, the image apparatus of Embodiment 5 can send, when a control command is input from an external processing apparatus, the control command to the image display apparatus during a period during which no image data is sent, which eliminates the need to store the control command and makes it possible to reduce the circuit configuration.

### (Embodiment 6)

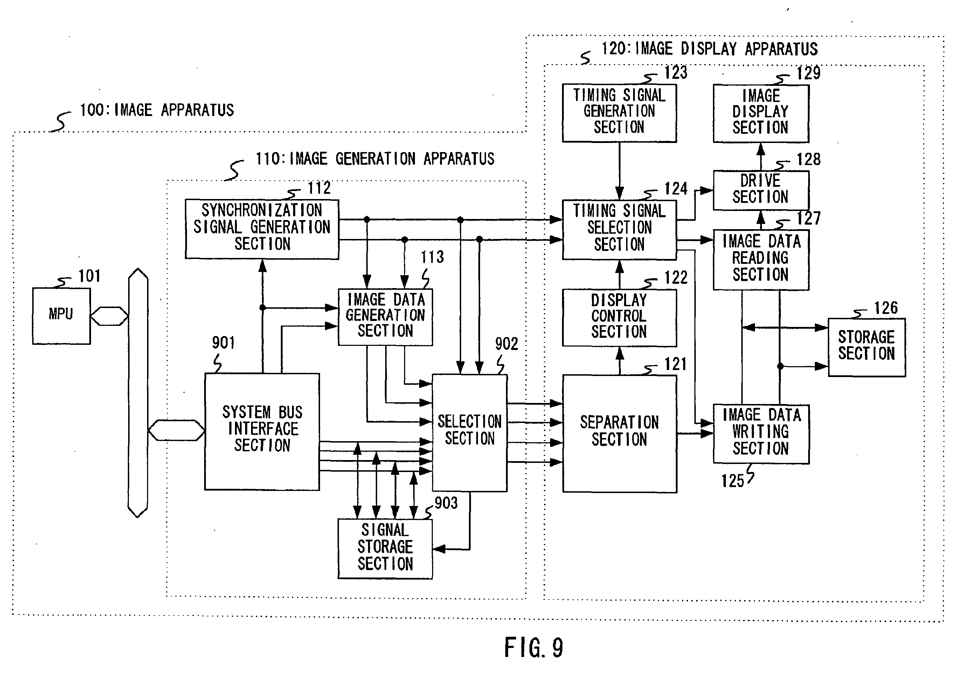

FIG.9 is a block diagram showing a configuration example of an image apparatus according to Embodiment 6. However, the components common to those in FIG.1 are assigned the same reference numerals as those in FIG.1 and detailed explanations thereof will be omitted.

The image apparatus in FIG.9 sends a control command and an argument of the control command through a common signal line using a control signal, which distinguishes the control command and the argument of the control command. Here, the argument refers to a parameter value to be passed to the image display apparatus together with the control command. The image display apparatus carries out processing according to the control command and this argument. For example, specifying an address at which image data is written to or read from storage section 126 makes it possible to scroll the image displayed.

In FIG.9, system bus interface section 901 writes one bit of the address bus of the system bus to signal storage section 903 as an identification signal (A0 signal).

Selection section 902 reads a data signal and A0 signal from signal storage section 903 during a blanking period during which no image data is output to separation section 121.

Signal storage section 903 stores not only a data signal input from system bus interface section 901 but also an A0 signal and when selection section 902 selects signal storage section 903, selection section 902 outputs the data signal stored as a control command or an argument of the control command together with the A0 signal to separation section 121.

Thus , the image apparatus of this Embodiment 6 sends a control command and an argument of the control command through a common signal line using a control signal, which distinguishes the control command and the argument of the control command, and can thereby perform high-level control with fewer signal lines.

### (Embodiment 7)

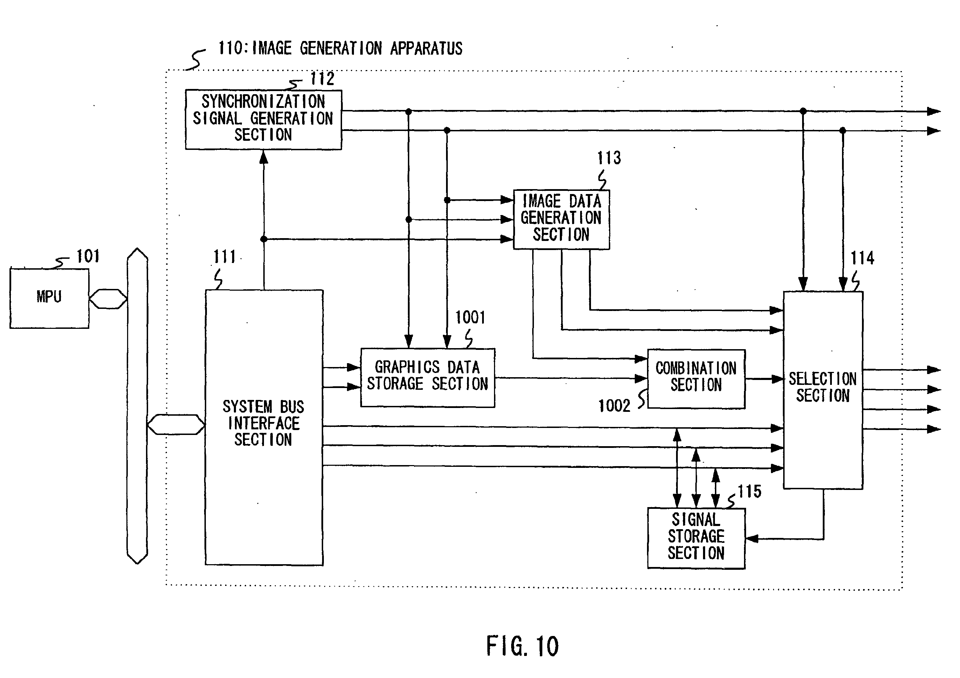

FIG.10 is a block diagram showing a configuration example of an image apparatus according to Embodiment 7. However, the components common to those in FIG.1 are assigned the same reference numerals as those in FIG.1 and detailed explanations thereof will be omitted.

The image apparatus in FIG.10 is different from FIG. 1 in that it is provided with graphic data storage section 1001 and combination section 1002, and selects image data and graphic data or combines these data with weights assigned thereto.

In FIG.10, graphic data storage section 1001 stores graphic data and a selector control signal output from system bus interface section 111 and outputs the graphic data and control signal to combination section 1002 in synchronization with an image synchronization signal output from synchronization signal generation section 112.

Combination section 1002 combines the image data output from image data generation section 113 and graphic data output from graphic data storage section 1001 and outputs the combined image data to selection section 114.

Then, an example of the combination section will be explained.

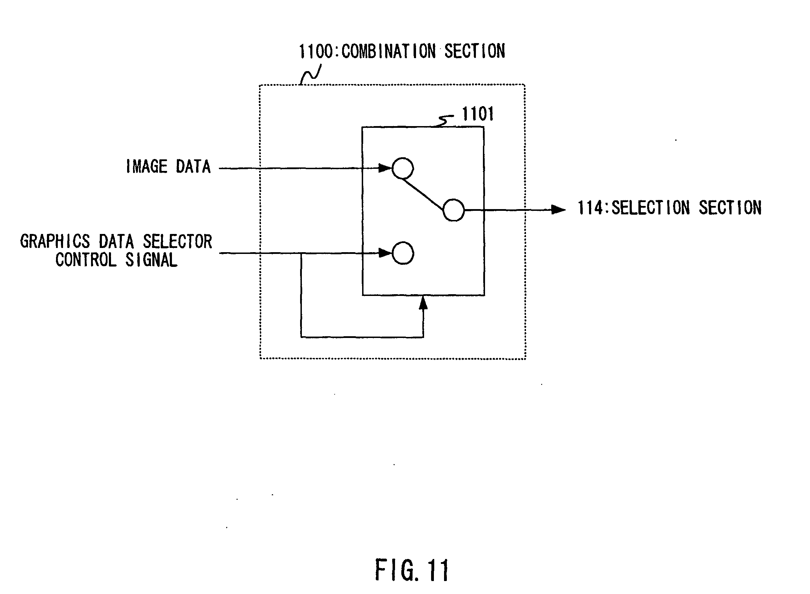

FIG.11 is a block diagram showing an example of the combination section of the image generation apparatus according to this Embodiment 7.

Combination section 1100 in FIG.11 is an image combination apparatus operating as combination section 1002 of the image generation apparatus according to Embodiment 7.

Selector 1101 selects either graphic data output from system bus interface section 111 or image data output from image data generation section 113 according to a selector control signal output from system bus interface section 111 and outputs to selection section 114.

Thus, by selecting and outputting either image data or graphic data, the image generation apparatus according to Embodiment 7 can improve power of expression of displayed images.

For example, using one bit of data output from system bus interface section 111, MPU 101 controls the selection of images to be displayed and can thereby perform a display in such a way as to overwrite the graphic data to be written in graphic data storage section 1001 at any position of the image data.

Then, another example of the combination section will be explained.

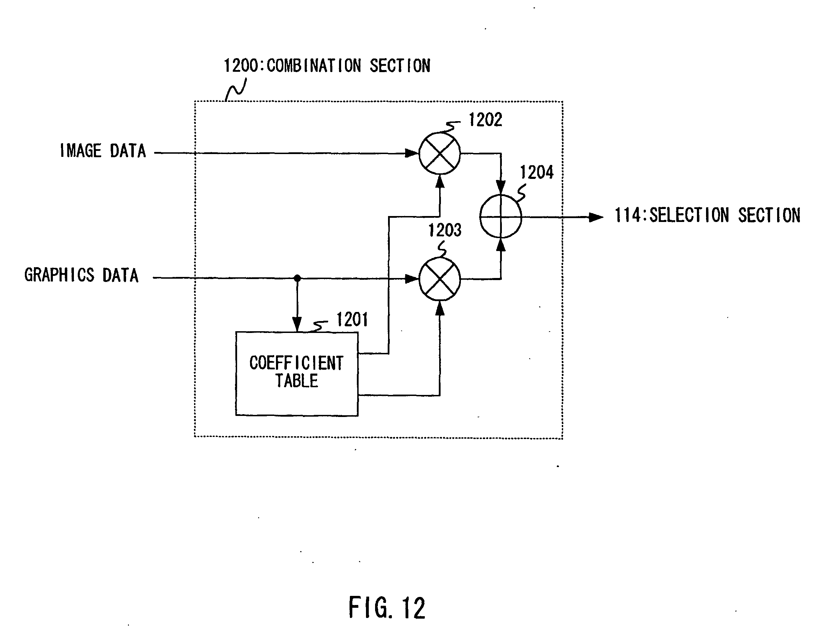

FIG.12 illustrates another example of the combination section of the image generation apparatus according to Embodiment 7.

Combination section 1200 in FIG.12 is an image combination apparatus operating as combination section 1002 of the image generation apparatus according to Embodiment 7.

In FIG.12, combination section 1200 is mainly constructed of coefficient table 1201, multiplier 1202, multiplier 1203 and adder 1204. Combination section 1200 combines graphic data output from system bus interface section 111 and image data output from image data generation section 113 with predetermined weights assigned thereto and outputs the combined data to selection section 114.

Coefficient table 1201 determines a combination ratio between the graphic data and image data based on a coefficient table signal output from system bus interface section 111, outputs the weighting factor of the image data in image combination to multiplier 1202 and outputs the weighting factor of the graphic data in image combination to multiplier 1203.

Multiplier 1202 multiplies the image data by the weighting factor output from coefficient table 1201 and outputs the multiplication result to adder 1204.

Multiplier 1203 multiplies the graphic data by the weighting factor output from coefficient table 1201 and outputs the multiplication result to adder 1204.

Adder 1204 adds up the multiplication result output from multiplier 1202 and the multiplication result output from multiplier 1203 and outputs the addition result to selection section 114 as the combined image data.

Thus, the image generation apparatus of Embodiment 7 can improve power of expression of displayed images by combining image data and graphic data with weights assigned thereto.

For example, graphic data can be transmitted to or displayed at any position of image data using combination section 1200.

### (Embodiment 8)

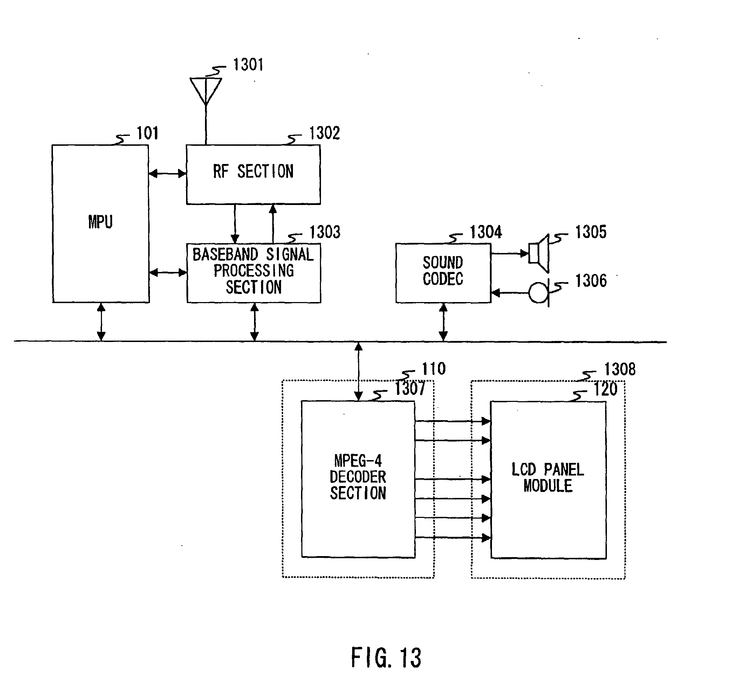

FIG.13 is a block diagram showing a configuration example of a communication apparatus according to Embodiment 8. The communication apparatus in FIG.13 is mainly constructed of antenna 1301, RF section 1302, baseband signal processing section 1303, voice CODEC section 1304, receiver 1305, microphone 1306, MPEG-4 decoder section 1307, LCD panel module 1308 and MPU 101.

In FIG.13, antenna 1301 receives a radio signal and outputs the received signal to RF section 1302 and transmits a transmit signal output from RF section 1302.

RF section 1302 down-coverts the received signal output from antenna 1301 to a baseband frequency, outputs to baseband signal processing section 1303 and up-converts the transmit signal output from baseband signal processing section 1303 to a radio frequency and outputs to antenna 1301.

Baseband signal processing section 1303 demodulates the received signal output from RF section 1302, outputs to MPU 101 and modulates the transmit signal output from MPU 101 and outputs to RF section 1302.

When the received signal output from baseband signal processing section 1303 is voice coded data, MPU 101 outputs the voice coded data to voice CODEC section 1304, and when the received signal is image coded data, MPU 101 outputs the image coded data to MPEG-4 decoder section 1307. MPU 101 outputs the voice coded signal output from voice CODEC section 1304 to baseband signal processing section 1303 as a transmit signal.

Voice CODEC section 1304 decodes the voice coded data output from MPU 101 and outputs the voice signal obtained to receiver 1305, codes a voice signal output from microphone 1306 and outputs the voice coded signal obtained to MPU 101.

Receiver 1305 outputs the voice signal output from voice CODEC section 1304 as voice.

Microphone 1306 receives voice and outputs the voice signal to voice CODEC section 1304.

MPEG-4 decoder section 1307 decodes the image coded data output from MPU 101, generates image data and outputs the image data together with an image synchronization signal to LCD panel module 1308.

LCD panel module 1308 displays moving images of the decoded image data.

Then, an operation of the communication apparatus according to Embodiment 8 will be explained.

A received signal is output to MPU 101 through antenna 1301, RF section 1302 and baseband signal processing section 1303.

When the received signal is image coded data, MPU 101 outputs the image coded data to MPEG-4 decoder section 1307, MPEG-4 decoder section 1307 decodes the image coded data and generates image data, outputs the image data together with an image synchronization signal to LCD panel module 1308, and LCD panel module 1308 displays moving images of the image data.

On the other hand, when the received signal is voice coded data, MPU 101 outputs the voice coded data to voice CODEC section 1304, voice CODEC section 1304 generates a voice signal from the voice coded data and outputs to receiver 1305. A voice signal input from microphone 1306 is coded by voice CODEC section 1304 and sent through baseband signal processing section 1303, RF section 1302 and antenna 1301.

When the communication apparatus according to Embodiment 8 displays no moving image of image data, MPU 101 can control LCD panel module 1308 through MPEG-4 decoder section 1307, and can thereby display graphics, etc. on LCD panel module 1308. Furthermore, by stopping a power supply to the part inside MPEG-4 decoder section 1307 that decodes image coded data, it is possible to reduce power consumption of the cellular phone.

Thus, the communication apparatus of Embodiment 8 uses an interface that controls external signals to transfer image data and control commands to the image display apparatus through a common signal line, and can thereby reduce the number of signal lines and reduce the size of the communication apparatus.

Furthermore, the communication apparatus of Embodiment 8 adds up image data and graphic data with weights assigned thereto and displays the addition result, and can thereby improve power of expression.

Furthermore, the communication apparatus of Embodiment 8 stops a power supply to a part of the image data generation section, and can thereby reduce power consumption when there is no need to generate image data.

For example, it is possible to control LCD panel module 1308 from MPU 101 without directly connecting MPU 101 and LCD panel module 1308.

Furthermore, using a common signal line to supply image data and control commands to LCD panel module 1308 makes it possible to reduce the number of signal lines and makes it easier to design the circuit board of the communication apparatus and reduce the size of the communication apparatus.

### (Embodiment 9)

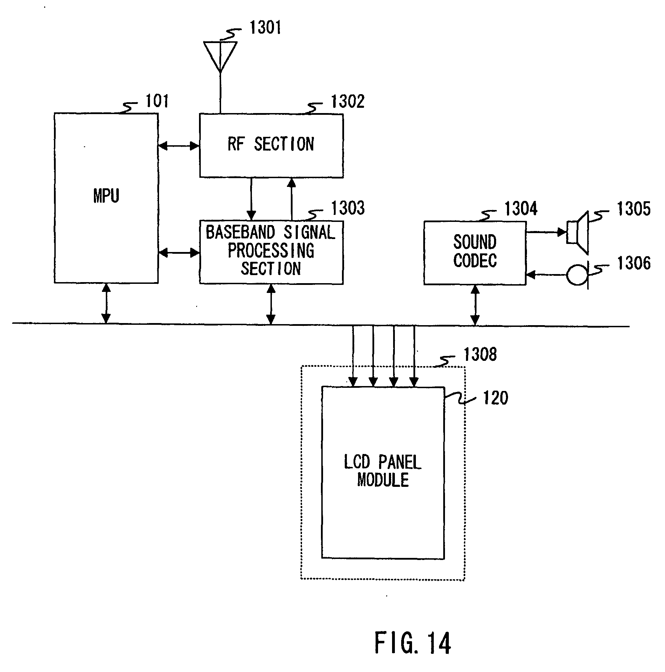

FIG.14 is a block diagram showing a configuration example of a communication apparatus according to Embodiment 9 of the present invention. However, components common to those in FIG.13 are assigned the same reference numerals and detailed explanations thereof will be omitted.

The communication apparatus in FIG.14 is mainly constructed of antenna 1301, RF section 1302, baseband signal processing section 1303, voice CODEC section 1304, receiver 1305, microphone 1306, LCD panel module 1308 and MPU 101.

Then, an operation of the communication apparatus according to Embodiment 9 will be explained.

A received signal is output to MPU 101 through antenna 1301, RF section 1302 and baseband signal processing section 1303.

MPU 101 outputs the received signal to voice CODEC section 1304, voice CODEC section 1304 generates a voice signal from the received signal and outputs to receiver 1305. A voice signal input from microphone 1306 is coded by voice CODEC section 1304 and sent through baseband signal processing section 1303, RF section 1302 and antenna 1301.

Furthermore, MPU 101 can control LCD panel module 1308 to display graphics, etc. on LCD panel module 1308, for example.

In such a configuration, it is possible to directly connect image display apparatus 120 made up of LCD panel module 1308 to the system bus of MPU 101 to control the image display apparatus 120 from MPU 101. The communication apparatuses according to Embodiment 8 and Embodiment 9 can use image display apparatus 120 made up of common LCD panel module 1308 for individual cellular phones having different functions, for example, with or without functions of displaying moving images of image data, and thereby contribute to a cost reduction compared to a case where different LCD modules are used for different types of apparatus.

Thus, the communication apparatus of Embodiment 9 can perform control and transfer image data with the MPU connected to the image display apparatus.

The image apparatus of the present invention is applicable to a mobile station apparatus in a mobile communication system such as a cellular phone, portable television telephone and a communication terminal equipped with computer functions, or a stationary type telephone set or television telephone set connected by a cable line, or television receiver, computer or information terminal apparatus having computer functions, etc.

In this case, by transferring image data and control commands to the image display apparatus through a common signal line using an interface that controls external signals, it is possible to reduce the number of signal lines and reduce the size of the electronic device.

As is apparent from the above-described explanations, by storing image data, displaying images corresponding to the image data using a synchronization signal generated inside the apparatus, stopping power supplies to parts of the apparatus which are not operating, selecting, when image data and a synchronization signal are input from the outside, the externally input image data and synchronization signal and displaying images, it is possible to display images of the pre-stored image data and external images in a configuration with low power consumption, a small circuit scale and high versatility.

This application is based on the Japanese Patent Application No.2000-285792 filed on September 20, 2000, entire content of which is expressly incorporated by reference herein.

### Industrial Applicability

The present invention is ideally applicable to an image apparatus and a communication apparatus that displays images.

## Claims

1. An image display apparatus comprising:
synchronization signal generating means for supplying a synchronization signal;
selecting means for selecting either said synchronization signal or an externally supplied synchronization signal; and
displaying means for displaying an image in synchronization with the synchronization signal selected by said selecting means.

2. The image display apparatus according to claim 1, wherein when a synchronization signal is supplied from the outside, the selecting means selects said synchronization signal.

3. The image display apparatus according to claim 1, further comprising image storing means for storing image data, wherein when image data is supplied from the outside, the displaying means displays an image corresponding to said image data and when no image data is supplied from the outside, the displaying means displays an image corresponding to the image data stored in the image storing means.

4. The image display apparatus according to claim 3, further comprising writing controlling means for setting timing of writing image data to said image storing means during a period other than the timing of reading image data from the image storing means and storing the image data input from the outside in said image storing means at said timing.

5. The image display apparatus according to claim 3, wherein the image storing means carries out reading and writing of image data simultaneously.

6. The image display apparatus according to claim 1, further comprising separating means for receiving an identification signal identifying a case of sending a control signal and a case of sending image data and separating a control signal and a signal including image data input from the outside through a common signal line using said identification signal, wherein the displaying means displays an image corresponding to said image data according to said control signal.

7. The image display apparatus according to claim 1, further comprising separating means for receiving an argument identification signal identifying a case of sending a control signal and a case of sending an argument of the control signal and separating a control signal and a signal including an argument of the control signal input from the outside through a common signal line using said argument identification signal, wherein the displaying means displays an image corresponding to said image data according to said control signal and the argument of said control signal.

8. An image generation apparatus comprising signal transmitting means for transmitting an identification signal identifying a case of sending a control signal and a case of sending image data, a control signal and image data to an image display apparatus using a common signal line in time sharing mode, wherein said image display apparatus comprising:
separating means for receiving said identification signal and separating a control signal and a signal including image data input from the outside through a common signal line using said identification signal;
synchronization signal generating means for supplying a synchronization signal;
selecting means for selecting either said synchronization signal or an externally supplied synchronization signal; and
displaying means for displaying an image corresponding to said image data in synchronization with the synchronization signal selected by said selecting means according to said control signal.

9. The image generation apparatus according to claim 8, further comprising signal storing means for storing an externally input control signal and outputting the stored control signal upon request of the signal transmitting means.

10. An image generation apparatus comprising signal transmitting means for transmitting an argument identification signal identifying a case of sending a control signal and a case of sending an argument of the control signal, a control signal and the argument of the control signal to an image display apparatus using a common signal line in time sharing mode, wherein said image display apparatus comprising:
synchronization signal generating means for supplying a synchronization signal;
selecting means for selecting either said synchronization signal or an externally supplied synchronization signal; and
displaying means for displaying an image in synchronization with the synchronization signal selected by said selecting means; and
separating means for receiving said argument identification signal identifying a case of sending said control signal and a case of sending the argument of said control signal and separating a control signal and a signal including the argument of the control signal input from the outside through a common signal line using said argument identification signal, wherein said displaying means displays an image corresponding to the image data according to said control signal and the argument of said control signal.

11. The image generation apparatus according to claim 10, further comprising signal storing means for storing an externally input control signal and an argument of the control signal and outputting the stored control signal and the argument of the control signal upon request of the signal transmitting means.

12. The image generation apparatus according to claim 8, further comprising flag storing means for storing a flag that can be referenced from the outside indicating a period during which the signal transmitting means is not sending image data.

13. The image generation apparatus according to claim 8, further comprising interrupt requesting means for sending a request signal to the external processing apparatus requesting for a control signal during a period during which the signal transmitting means is not sending image data.

14. The image generation apparatus according to claim 8, further comprising:
decoding means for decoding externally input coded image data; and
image synchronization signal generating means for generating an image synchronization signal indicating the output timing of said decoded image data.

15. The image generation apparatus according to claim 14, further comprising image selecting means for selecting decoded image data and externally input image data, wherein the signal transmitting means outputs said selected image data or external image data, said image display apparatus comprising:
synchronization signal generating means for supplying a synchronization signal;
selecting means for selecting either said synchronization signal or externally supplied synchronization signal; and
displaying means for displaying an image in synchronization with the synchronization signal selected by said selecting means.

16. The image generation apparatus according to claim 15, further comprising image storing means for storing externally input image data and outputting the stored image data to the image selecting means.

17. The image generation apparatus according to claim 14, further comprising image combining means for assigning respective weights to the decoded image data and externally input image data and adding up and combining the weighted image data and external image data, wherein the combined image data is output to the image display apparatus according to claim 1.

18. The image generation apparatus according to claim 17, further comprising image storing means for storing externally input image data and outputting the stored image data to the image combining means.

19. The image generation apparatus according to claim 14, further comprising power controlling means for controlling power supplies to the decoding means and image synchronization signal generating means and stopping power supplies when said decoding means and said image synchronization signal generating means do not operate.

20. An image apparatus provided with an image display apparatus, said image display apparatus comprising:
synchronization signal generating means for supplying a synchronization signal;
selecting means for selecting either said synchronization signal or an externally supplied synchronization signal; and
displaying means for displaying an image in synchronization with the synchronization signal selected by said selecting means.

21. An image apparatus provided with an image generation apparatus, said image display apparatus comprising:
separating means for receiving said identification signal and separating a control signal and a signal including image data input from the outside through a common signal line using said identification signal;
synchronization signal generating means for supplying a synchronization signal;
selecting means for selecting either said synchronization signal or an externally supplied synchronization signal; and
displaying means for displaying an image corresponding to said image data in synchronization with the synchronization signal selected by said selecting means according to said control signal.

22. A communication apparatus provided with an image display apparatus, said image display apparatus comprising:
synchronization signal generating means for supplying a synchronization signal;
selecting means for selecting either said synchronization signal or an externally supplied synchronization signal; and
displaying means for displaying an image in synchronization with the synchronization signal selected by said selecting means.

23. A communication apparatus provided with an image generation apparatus, said image display apparatus comprising:
separating means for receiving said identification signal and separating a control signal and a signal including image data input from the outside through a common signal line using said identification signal;
synchronization signal generating means for supplying a synchronization signal;
selecting means for selecting either said synchronization signal or an externally supplied synchronization signal; and
displaying means for displaying an image corresponding to said image data in synchronization with the synchronization signal selected by said selecting means according to said control signal.

24. An image display method comprising the steps of:
supplying a synchronization signal;
selecting either said synchronization signal or an externally supplied synchronization signal; and
displaying an image in synchronization with said selected synchronization signal.
